# EUROPEAN PATENT SPECIFICATION

(11) **EP 1 447 125 B1**
(45) Date of publication and mention of the grant of the patent: **11.06.2008**
(21) Application number: 02748884.0
(22) Date of filing: 11.07.2002
(51) Int. Cl.: B01D 61/06, F04B 9/115

(54) **PUMP FOR SEAWATER DESALINATION SYSTEMS USING REVERSE OSMOSIS**
Pumpe für Umkehrosmose-Anlagen zum Entsalzen von Meerwasser
POMPE POUR SYSTEMES DE DESALINISATION DE L'EAU DE MER PAR OSMOSE INVERSE

(30) Priority: 27.07.2001 ES 200101768
(43) Date of publication of application: 18.08.2004
(73) Proprietor: Bolsaplast S.A., 08203 Sabadell (ES)
(72) Inventor: PARES CRIVILLE, Antonio, E-08203 Sabadell (Barcelona) (ES)
(74) Representative: PROPI, S.L.
(86) International application number: PCT/ES2002/000350
(87) International publication number: WO 2003/011439

(56) References cited:
- WO-A-86/07118
- US-A- 4 659 294
- US-A- 4 690 160
- US-A- 4 761 118
- US-A- 4 929 347
- US-A- 5 628 198

## Description

### OBJECT OF THE INVENTION

As its title indicates, the present invention refers to a pump for salt water desalinating systems by reverse osmosis, of the type which have two end chambers wherein respective pistons are housed which define alternating movements, alternately pumping salt water towards a reverse osmosis membrane pertinent to a desalinating system, said desalinating system furthermore including a directional valve actuated by a pilot valve which is in turn actuated by the shifting of the pistons.

### BACKGROUND OF THE INVENTION

There are currently different pumps or pumping systems that are applicable in salt water desalinization and which include a hydraulic cylinder in which two pistons are housed that are alternately shifted in order to pump the salt water towards the osmosis membrane.

These systems generally include a directional valve which permits taking advantage of the pressure of the water repelled by the osmosis membrane by using it to collaborate in the cylinder of the pistons and to consequently increase the pressure of the water supplied to the membrane.

In this section, it is important to point out patents US 5,462,414, WO 98/22202, US 4,367,140 and US 4,793,153, which disclose systems of the type mentioned.

In order to cause the reversal in the shifting direction of the pistons, said patents include a hydraulic circuit that in all cases requires the use of non-return valves so as to permit their functioning, additionally incorporating pilot valves and directional valves that are separated from the pump body, which poses different problems, it being worth pointing out, on one hand, the existence of a high number of outside conductions with the subsequent risk of breakage and pressure losses and, on the other hand, the idleness of the non-return valves due to the formation of saline deposits in the assembly area thereof.

The document WO 86/07118 show a fluid intensifier which can use a low pressure fluid to eject fluid at a higher pressure, also other object of this invention is to provide a fluid intensifier which operates reliably with interruptible fluid sources. The fluid intensifier includes a main cylinder assembly (12), a fixed assembly (14) disposed within the main cylinder assembly (12), a reciprocating assembly (16) slideably engaged with the fixed assembly (14), and a bistable valve assembly (18). The bistable valve assembly causes incoming, low pressure fluid to be directed against one of the moving pistons (104 and 106) of the reciprocating assembly (16), to pump fluid out of regions (110 and 112) via tubes (38 and 40). At each end of a stroke, moving pistons (104 and 106) mechanically move a collar (117) of bistable valve assembly (18), which hydraulically moves a spool cylinder (118) of the bistable valve assembly (18), which redirects the incoming fluid to a moving piston (104 or 106). The bistable valve assembly (18) ensures that the fluid intensifier will operate properly even if the flow of incoming fluid is interrupted.

### DESCRIPTION OF THE INVENTION

The invention is defined in the appended claims.

The pump for salt water desalinating systems by reverse osmosis object of this invention has been proposed to solve the mentioned problems, which has constructive particularities on one hand oriented towards permitting its functioning without incorporating non-return valves, and on the other hand to obtain a compact equipment and with a very reduced number of outside conductions.

Said pump, being of those which have two end chambers where respective pistons are housed, have the particularity that the pump body has a third centrally arranged chamber between the two end chambers, provided with an outside pressure inlet with two end openings connected to the directional valve and an intermediate opening connected to a water outlet conduit, a slide part being housed in said central chamber, which has a side cavity forming a closure with the wall of said third chamber, the slide, depending on its position, carrying out the alternate opening of the end openings connected to the directional valve and the interconnection by means of the side cavity of the other two openings, simultaneously permitting the pressure to enter from the intermediate chamber to the directional valve and guiding the water coming from the directional valve to the water outlet conduit.

This third chamber, defined in the pump body, precisely constitutes the pilot valve of the directional valve.

The previously mentioned slide housed in the central chamber of the pump body internally has a hole for the passage of the shaft of the pistons and an inner recess in which a thickening defined in the mid-area of the shaft is housed with the capacity of longitudinal shifting, this thickening being responsible for causing the slide part to shift inside of the third chamber of the pump when the pistons are close to the ends of their run.

According to the invention, the directional valve has a tubular body joined to the pump body and is provided with two end compartments and with two intermediate compartments in which two pistons and two slides joined by a common shaft are housed, respectively, and with the capacity of simultaneous alternate shifting.

The end compartments of the directional valve are respectively connected to the end openings of the pilot valve.

According to the invention, one of the intermediate compartments of the directional valve is connected to the reverse osmosis membrane inlet and has two end openings connected to the frontal areas of the end chambers of the pump body and a central opening connected to the pressure inlet and to the central chamber of the pump body. The slide arranged inside of said intermediate compartment has a side cavity alternately connecting the pressure inlet with the frontal area of the end chambers of the pump body, permitting the alternate connection of the frontal areas of said end chambers of the pump with said intermediate compartment of the directional valve.

The other intermediate compartment of the directional valve is connected to the outlet for the water repelled by the reverse osmosis membrane and has two end openings connected to the back areas of the end chambers of the pump body and a central opening connected to the intermediate opening of the central chamber of the pump body and to the outside water outlet. The slide housed in this compartment has a side cavity alternately connecting the back area of the end chambers of the pump body with the outside water outlet, also alternately permitting the connection of the back areas of the end chambers of the pump body with said intermediate chamber of the directional valve.

The assembly of the directional valve on the pump body enables that the conduits joining it with the end chambers of the pump are internally defined and the slides housed inside of the directional valve can carry out, by means of the corresponding cavities, the interconnection in pairs of the openings defined in the intermediate compartments of said directional valve, causing the water to be directed under pressure towards the reverse osmosis membrane inlet, and the water repelled by the osmosis membrane to be guided towards one of the latter areas of the end chambers of the pump, depending on the shift direction of the pistons of the pump.

### DESCRIPTION OF THE DRAWINGS

In order to complement the description being given and with the object of helping to understand the features of the invention, a set of drawings accompany the present specification which, with an illustrative and non-limiting character, show the following:

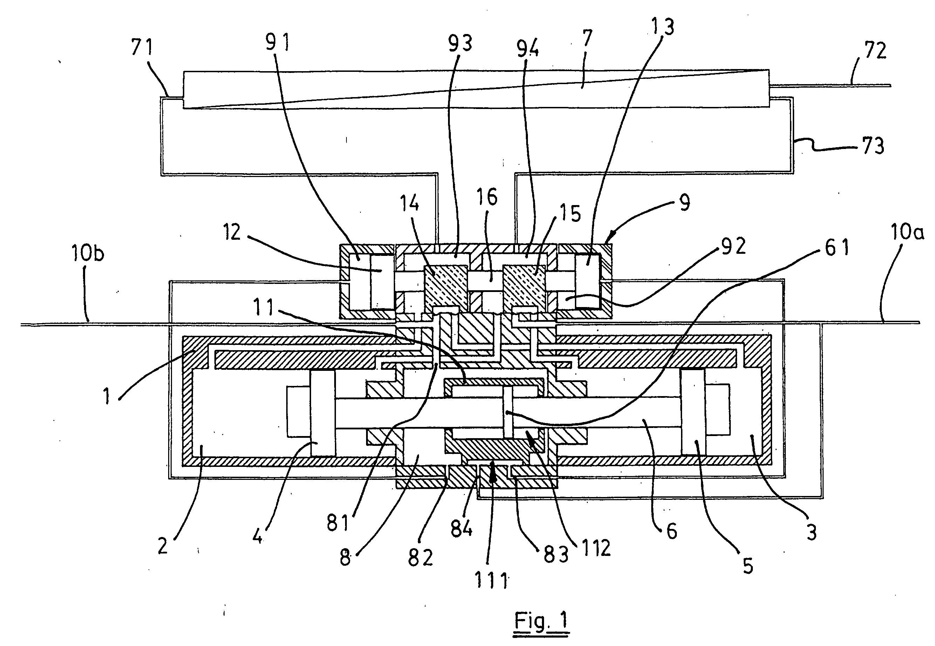

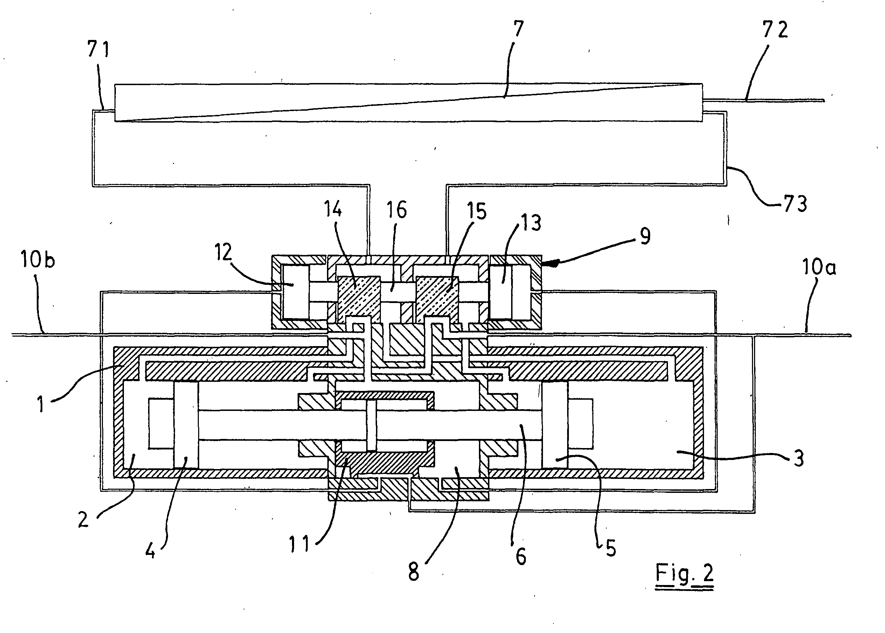

Figures 1 and 2 show respective elevational schematic views of the pump object of the invention, longitudinally sectioned and connected to a reverse osmosis membrane, being possible to see in said figures the slides of the pilot valve and of the directional valve in the two end positions.

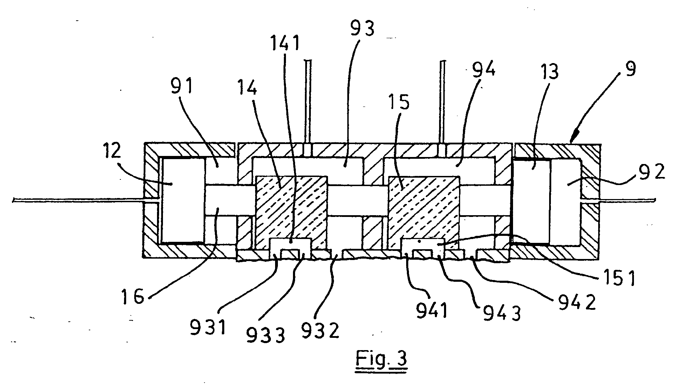

Figure 3 shows an enlarged detail of the directional valve with the slide parts shown in the same position as in figure 2.

### PREFERRED EMBODIMENT OF THE INVENTION

As can be seen in said figures, the pump object of the invention has a body (1) with two end chambers (2, 3) in which respective pistons (4, 5) joined by a common shaft (6) are housed.

The pistons (4, 5) define alternate movements, alternately pumping salt water towards the inlet (71) of a reverse osmosis membrane (7) pertinent to a desalinization system and which has an outlet (72) for the desalinated and osmosed water, and an outlet (73) for the repelled water.

The pump body (1) centrally has a central chamber (8) provided with an outside pressure inlet (81), with two end openings (82, 83) connected to the directional valve (9), and an intermediate opening (84) connected to a water outlet conduit (10a).

The central chamber (8) houses a slide part (11) that has a side cavity (111) which, depending on its position, carries out the alternate opening of the end openings (82, 83) and their alternate connection to the intermediate opening (84), alternately sending the water pressure introduced into the central chamber (8) through the outside inlet (10b) towards the end compartments (91, 92) of the directional valve and the water coming from the end compartments (91, 92) of the directional valve to the water outlet conduit (10a).

The slide (11) has a hole inside for the passage of the shaft (6) and an inner recess (112) in which a thickening (61) is housed, with the capacity of longitudinal shifting, which is responsible for causing the slide (11) to shift between the two positions shown in the figures.

The directional valve (9) is joined to the pump body (1) and has, in addition to the two end compartments (91, 92), two intermediate compartments (93, 94); said compartments (91, 92, 93, 94) respectively house two pistons (12, 13) and two slides (14, 15) joined by a common shaft (16).

The intermediate compartment (93) of the directional valve is connected to the inlet (71) of the reverse osmosis membrane (7); said compartment (93) additionally having two end openings (931, 932) connected to the frontal areas of the end chambers (2 and 3) of the pump, and a central opening (933) connected to the outside pressure inlet (81) and to the central chamber (8).

The slide (14) has a side cavity (141) alternately connecting the central opening (933) with the end openings (931 and 932), causing the alternate entrance of pressure towards the frontal area of the end chambers (2 and 3) and the also alternate connection of the frontal areas of said end chambers (2, 3) with the intermediate compartment (93) of the directional valve.

The intermediate compartment (94) of the directional valve is connected to the repelled water outlet (73) of the membrane (7) and has two end openings (941, 942) connected to the back areas of the end chambers (2 and 3) of the pump body, and a central opening (943) connected to the intermediate opening (84) of the central chamber (8) and to the outside water outlet (10a).

The slide (15) housed in the intermediate compartment (94) has a side cavity (151) alternately connecting the back area of the end chambers (2 and 3) with the outside water outlet (10a), also alternately enabling the passage of the pressure of the water repelled by the membrane towards the back areas of the end chambers (2 and 3).

Having sufficiently described the nature of the invention as well as a preferred embodiment example, it is hereby stated for due purposes that the materials, shape, size and arrangement of the described elements can be modified, as long as this implies no alteration of the essential features of the invention, which are claimed below.

## Claims

1. Pump for sea water desalinating systems by reverse osmosis, said pump comprising a body (1) with two end chambers (2,3) in which respective pistons (4, 5) are housed defining alternate movements, alternately pumping sea water toward a reverse osmosis membrane (7) of a desalination system, said desalination further including directional valve (9) actuated by a pilot valve, said pilot valve being actuated by the shifting of the pistons (4,5); **characterised in that** the directional valve (9) has a tubular body joined to the pump body (1), said directional valve (9) being provided with two end compartments (91, 92) and with two intermediate compartments (93, 94) each end compartment housing a piston (12, 13) and each intermediate compartment housing a slide (14, 15),wherein the two pistons and the two slides are joined by a common shaft (16) and enabling alternate simultaneous shifting; the pump body (1) having a third, centrally arranged chamber (8) between the two end chambers (2,3), said third, centrally arranged chamber (8) constituting the pilot value is provided with an external pressure intake (81), with two end openings (82,83) connected to the directional valve (9), and with an intermediate opening (84) connected to a water outlet conduit (10a), a sliding block (11) being housed in said central chamber (8), said sliding block (11) having a lateral cavity (111) forming a closure with the wall of said third chamber (8), simultaneously permitting pressure intake from the intermediate chamber (8) to the directional valve (9) and the guidance of water coming from the directional valve (9) to the water outlet conduit (10a), wherein the third chamber constitutes the pilot valve of the directional valve (9)

2. Pump according to the previous claim, **characterized in that** the sliding block (11) has an inner hole for the passage of the shaft (6) of the pistons (4, 5) and an inner recess (112) in which a widening (61) is housed with the capacity of longitudinal shifting, defined in the middle area of the shaft (6) and responsible for causing the sliding block (11) to shift inside the central chamber (8) of the pump.

3. - Pump according to the previous claims, **characterized in that** the end compartments (91, 92) of the directional valve (9) are connected, respectively, to the end openings (82, 83) of the pilot valve.

4. - Pump according to the previous claims, **characterized in that** the intermediate compartment (93) of the directional valve is connected to the inlet (71) of the reverse osmosis membrane (7) and has two end openings (931, 932) connected to the frontal areas of the end chambers (2, 3) and the central opening (933) connected to the pressure inlet (10b) and to the central chamber (8); the slide (14) housed in said compartment having a lateral cavity (141) alternately connecting the pressure inlet (10b) with the frontal area of said end chambers (2, 3) of the pump body (1), also enabling the alternate connection of the frontal areas of said end chambers (2, 3) with said intermediate compartment (93) of the directional valve.

5. - Pump according to the previous claims, **characterized in that** the intermediate compartment (94) of the directional valve is connected to the outlet (73) for the water repelled by the reverse osmosis membrane (7) and has two end openings (941, 942) connected to the back areas of the end chambers (2, 3) of the pump body (1) and a central opening (943) connected to the intermediate opening (84) of the central chamber (8) of the pump body and to the outside water outlet conduit (10a); the slide (15) housed in said compartment (94) having a lateral cavity (151) alternately connecting the back area of the end chambers (2,3) of the pump body (1) with the outside water outlet conduit (10a), also enabling the alternate connection of the back areas of the chambers (2, 3) with said intermediate compartment (94) of the directional valve.

## Patentansprüche

1. Eine Pumpe für Meerwasserentsalzungsanlagen durch Umkehrosmose, wobei die besagte Pumpe ein Gehäuse (1) mit zwei Endkammern (2, 3) umfasst, in denen jeweils ein Kolben (4, 5) aufgenommen ist, die abwechselnde Bewegungen definieren, wobei diese abwechselnd Meerwasser zu einer Umkehrosmosemembran (7) einer Entsalzungsanlage pumpen, wobei die besagte Entsalzung ferner ein Wegeventil (9) einschließt, das seitens eines Steuerventils betrieben wird, wobei das besagte Steuerventil durch die Verschiebung der Kolben (4, 5) angetrieben wird; **dadurch gekennzeichnet, dass** das Umkehrventil (9) ein mit dem Pumpengehäuse (1) verbundenes röhrenförmiges Gehäuse besitzt, wobei das Wegeventil (9) mit zwei Endabteilen (91, 92) und mit zwei Zwischenabteilen (93, 94) ausgestattet ist, wobei in jedem Endabteil ein Kolben (12, 13) angeordnet und in jedem Zwischenabteil eine Gleitfläche (14, 15) angeordnet ist, wonach die zwei Kolben und die beiden Gleitflächen durch eine gemeinsame Achse (16) verbunden sind und eine simultane abwechselnde Verschiebung ermöglichen; wobei das Pumpengehäuse (1) eine dritte, zentral angeordnete Kammer (8) zwischen den beiden Endkammern (2, 3) besitzt, wobei die besagte dritte, zentral angeordnete Kammer (8), die das Steuerventil bildet, mit einem externen Druckeinlass (81), mit zwei an dem Wegeventil (9) angeschlossenen Endöffnungen (82, 83), und mit einer an einem Wasserabflusskanal (10a) angeschlossenen Zwischenöffnung (84) ausgestattet ist, wobei ein Gleitstück (11) über einen seitlichen Hohlraum (111) verfügt, der einen Abschluss mit der Wand der besagten dritten Kammer (8) bildet, der gleichzeitig einen Druckeinlass von der Zwischenkammer (8) zum Wegeventil (9) und die Führung des aus dem Wegeventil (9) kommenden Wassers an den Wasserabflusskanal (10a) erlaubt, wonach die dritte Kammer das Steuerventil des Wegeventils (9) bildet.

2. Eine Pumpe nach dem vorherigen Anspruch, **dadurch gekennzeichnet, dass** das Gleitstück (11) eine innere Bohrung für den Durchlass der Achse (6) der Kolben (4, 5) und eine innere Aussparung (112) besitzt, in der eine Aufweitung (61) mit der Fähigkeit einer längs laufenden Verschiebung aufgenommen ist, die in dem mittleren Bereich der Achse (6) definiert und dafür verantwortlich ist, das Gleitstück (11) dazu zu bringen, sich innerhalb der zentralen Kammer (8) der Pumpe zu verschieben.

3. Eine Pumpe nach den vorherigen Ansprüchen, **dadurch gekennzeichnet, dass** die Endabteile (91, 92) des Wegeventils (9) jeweils an den Endöffnungen (82, 83) des Steuerventils angeschlossen sind.

4. Eine Pumpe nach den vorherigen Ansprüchen, **dadurch gekennzeichnet, dass** das Zwischenabteil (93) des Wegeventils mit dem Einlass (71) der Umkehrosmosemembran verbunden (7) ist und zwei mit den vorderen Bereichen der Endkammern (2, 3) verbundene Endöffnungen (931, 932) und die mit dem Druckeinlass (10b) und der zentralen Kammer (8) verbundene zentrale Öffnung (933) besitzt; wobei die in dem besagten Abteil angeordnete Gleitfläche (14) über einen seitlichen Hohlraum (141) verfügt, der den Druckeinlass (10b) abwechselnd mit dem vorderen Bereich der besagten Endkammern (2, 3) des Pumpengehäuses (1) verbindet, wobei ebenfalls die abwechselnde Verbindung der vorderen Bereiche der besagten Endkammern (2, 3) mit dem besagten Zwischenabteil (93) des Wegeventils ermöglicht wird.

5. Eine Pumpe nach den vorherigen Ansprüchen, **dadurch gekennzeichnet, dass** das Zwischenabteil (94) des Wegeventils mit dem Abfluss (73) für das von der Umkehrosmosemembran (7) zurückgewiesene Wasser verbunden ist und zwei mit den hinteren Bereichen der Endkammern (2, 3) des Pumpengehäuses (1) verbundene Endöffnungen (941, 942) und eine mit der Zwischenöffnung (84) der zentralen Kammer (8) des Pumpengehäuses und dem äußeren Wasserabflusskanal (10a) verbundene zentrale Öffnung (943) besitzt; wobei die in dem besagten Abteil (94) angeordnete Gleitfläche (15) über einen seitlichen Hohlraum (151) verfügt, der den hinteren Bereich der Endkammern (2, 3) des Pumpengehäuses (1) abwechselnd mit dem äußeren Wasserabflusskanal (10a) verbindet, wobei ebenfalls die abwechselnde Verbindung der hinteren Bereiche der Kammern (2, 3) mit dem besagten Zwischenabteil (94) des Wegeventils ermöglicht wird.

## Revendications

1. Pompe pour systèmes de dessalement d'eau de mer par osmose inverse, ladite pompe comprenant un corps (1) avec deux chambres d'extrémité (2, 3) dans lesquelles des pistons respectifs (4, 5) sont logés définissant des mouvements alternés, pompant alternativement de l'eau de mer en direction d'une membrane d'osmose inverse (7) d'un système de dessalement, ledit dessalement comprenant en outre une vanne directionnelle (9) actionnée par une vanne pilote, ladite vanne pilote étant actionnée par le déplacement des pistons (4, 5); **caractérisée en ce que** la vanne directionnelle (9) possède un corps tubulaire relié au corps de la pompe (1), ladite vanne directionnelle (9) comportant deux compartiments d'extrémité (91, 92) et deux compartiments intermédiaires (93, 94) chaque compartiment d'extrémité logeant un piston (12, 13) et chaque compartiment intermédiaire logeant une coulisse (14,15), dans laquelle les deux pistons et les deux coulisses sont reliés par un axe commun (16) et permettant un déplacement alterné simultané; le corps de la pompe (1) ayant une troisième chambre (8) disposée centralement entre les deux chambres d'extrémité (2, 3), ladite troisième chambre (8) disposée centralement constituant la vanne pilote comporte une prise de pression externe (81), avec deux ouvertures d'extrémité (82, 83) raccordées à la vanne directionnelle (9), et avec une ouverture intermédiaire (84) raccordée au conduit de sortie d'eau (10a), un bloc coulissant (11) étant logé dans ladite chambre centrale (8), ledit bloc coulissant (11) possédant une cavité latérale (111) formant une fermeture avec la paroi de ladite troisième chambre (8) permettant simultanément la prise de pression depuis la chambre intermédiaire (8) jusqu'à la vanne directionnelle (9) et le guidage de l'eau depuis la vanne directionnelle (9) jusqu'au conduit de sortie d'eau (10a), dans laquelle la troisième chambre constitue la vanne pilote de la vanne directionnelle (9).

2. Pompe selon la revendication précédente, **caractérisée en ce que** le bloc coulissant (11) possède un orifice interne pour le passage de l'axe (6) des pistons (4, 5) et un évidement interne (112) dans lequel un renflement (61) est logé avec la capacité de déplacement longitudinal, défini dans la zone du milieu de l'axe (6) et chargé de provoquer le déplacement du bloc coulissant (11) à l'intérieur de la chambre centrale (8) de la pompe.

3. Pompe selon les revendications précédentes, **caractérisée en ce que** les compartiments d'extrémité (91, 92) de la vanne directionnelle (9) sont raccordés, respectivement, aux ouvertures d'extrémités (82, 83) de la vanne pilote.

4. Pompe selon les revendications précédentes, **caractérisée en ce que** le compartiment intermédiaire (93) de la vanne directionnelle est raccordé à l'entrée (71) de la membrane d'osmose inverse (7) et possède deux ouvertures d'extrémité (931, 932) raccordées aux zones frontales des chambres d'extrémité (2, 3) et l'ouverture centrale (933) raccordée à l'entrée de pression (10b) et à la chambre centrale (8); la coulisse (14) logée dans ledit compartiment ayant une cavité latérale (141) raccordant alternativement l'entrée de pression (10b) avec la zone frontale desdites chambres d'extrémité (2, 3) du corps de la pompe (1), permettant également le raccordement alterné des zones frontales desdites chambres d'extrémité (2, 3) avec ledit compartiment intermédiaire (93) de la vanne directionnelle.

5. Pompe selon les revendications précédentes, **caractérisée en ce que** le compartiment intermédiaire (94) de la vanne directionnelle est raccordé à la sortie (73) pour l'eau repoussée par la membrane d'osmose inverse (7) et possède deux ouvertures d'extrémité (941, 942) raccordées aux zones arrière des chambres d'extrémité (2, 3) du corps de la pompe (1) et une ouverture centrale (943) raccordée à l'ouverture intermédiaire (84) de la chambre centrale (8) du corps de la pompe et au conduit de sortie d'eau externe (10a); la coulisse (15) logée dans ledit compartiment (94) possédant une cavité latérale (151) raccordant alternativement la zone arrière des chambres d'extrémité (2, 3) du corps de la pompe (1) avec le conduit de sortie d'eau externe (10a), permettant également le raccordement alterné des zones arrière des chambres (2, 3) avec ledit compartiment intermédiaire (94) de la vanne directionnelle.
